# EUROPEAN PATENT APPLICATION

(11) **EP 4 583 077 A1**
(43) Date of publication of application: **09.07.2025**
(21) Application number: 24208646.0
(22) Date of filing: 24.10.2024
(51) Int. Cl.: G08G 5/21, G08G 5/25, G08G 5/53, G08G 5/55, G08G 5/80

(54) **APPARATUS AND METHOD FOR CONTROLLING AIR MOBILITY**

(30) Priority: 04.01.2024 KR 20240001720
(71) Applicant: Hyundai Motor Company, Seoul 06797 (KR); Kia Corporation, Seocho-gu Seoul 06797 (KR)
(72) Inventor: HAN, Su Young, 18280 Hwaseong-si (KR)
(74) Representative: Viering, Jentschura & Partner mbB Patent- und Rechtsanwälte

(57) **Abstract**

An embodiment apparatus for controlling an receiving device on a first air mobility to receive first surveillance information of the first air mobility and second surveillance information of a second air mobility, a sensor device on the first air mobility to obtain sensor information for searching for the second air mobility, one or more processors, and a storage device storing a program to be executed by the one or more processors, the program including instructions to determine a risk zone on a first flight path of the first air mobility based on the first surveillance information, determine whether the second air mobility is an avoidance target located in the risk zone based on the second surveillance information or the sensor information, and perform an avoidance flight of the first air mobility in response to a determination that the second air mobility is the avoidance target.

## Description

### CROSS-REFERENCE TO RELATED APPLICATIONS

This application claims the benefit of Korean Patent Application No. 10-2024-0001720, filed on January 4, 2024, which application is hereby incorporated herein by reference.

### TECHNICAL FIELD

The present disclosure relates to an apparatus and a method for controlling an air mobility.

### BACKGROUND

For future traffic and transportation systems, research on an air mobility has been active, and recently, research on an unmanned air mobility has been actively conducted.

Operating an air mobility generally involves flying along a specified flight path, and the area around the route must be monitored in real time to avoid an avoidance target such as another aircraft when the avoidance target approaches.

In addition to manned aircraft, as the number of unmanned aircraft increases rapidly, there is a greater need for measures to ensure the safe flight of an air mobility. In addition, as research on autonomous flight technology becomes more active, the importance of avoidance flight is increasing.

Therefore, there is a need for technology to increase the flight stability of an air mobility using minimal equipment without constructing a new system.

### SUMMARY

The present disclosure relates to an apparatus and a method for controlling an air mobility. Particular embodiments relate to a technology for determining an avoidance target and performing an avoidance flight during flight.

Embodiments of the present disclosure can solve problems occurring in the prior art while advantages achieved by the prior art are maintained intact.

An embodiment of the present disclosure provides an apparatus and a method for controlling an air mobility capable of safely inducing an avoidance flight of the air mobility regardless of the type of air mobility.

Another embodiment of the present disclosure provides an apparatus and a method for controlling an air mobility capable of performing an avoidance flight more accurately while making full use of an existing system.

The technical problems solvable by embodiments of the present disclosure are not limited to the aforementioned problems, and any other technical problems not mentioned herein will be clearly understood from the following description by those skilled in the art to which the present disclosure pertains.

According to an embodiment of the present disclosure, an apparatus for controlling air mobility includes an receiving device that is mounted on a first air mobility to receive first surveillance information of the first air mobility and second surveillance information of a second air mobility, a sensor device that is mounted on the first air mobility to obtain sensor information for searching for the second air mobility, and a processor that is mounted on the first air mobility to determine a risk zone on a first flight path of the first air mobility based on the first surveillance information, determine whether the second air mobility is an avoidance target located in the risk zone based on the second surveillance information or the sensor information, and perform an avoidance flight of the first air mobility in response to the second air mobility being the avoidance target.

According to an embodiment, the processor may predict a second flight path of the second air mobility based on the second surveillance information or the sensor information and determine the second air mobility as the avoidance target when the second flight path overlaps the risk zone.

According to an embodiment, the processor may provide the first flight path and the second flight path to a control center and request modification of the first flight path when it is determined that the second flight path obtained based on the second surveillance information overlaps with the risk zone.

According to an embodiment, the processor may modify the first flight path to avoid the second flight path when it is determined that the second flight path obtained based on the sensor information overlaps with the risk zone.

According to an embodiment, the processor may search for the second air mobility based on the sensor information in response to the second air mobility not being discovered based on the second surveillance information.

According to an embodiment, the processor may monitor a radar reflected wave of the sensor device in response to the second air mobility not being discovered based on the second surveillance information.

According to an embodiment, the processor may obtain an image by using a camera of the sensor device in response to the second air mobility not being discovered based on the radar reflected wave.

According to an embodiment, the processor may control the camera to point toward the second air mobility when the second air mobility is discovered based on the radar reflected wave.

According to an embodiment, the processor may search a table storing an avoidance scheme depending on whether the second surveillance information is identified and whether the sensor information is identified and perform the avoidance flight of the first air mobility.

According to an embodiment, the table may store priorities for using the second surveillance information and the sensor information, depending on whether the second surveillance information is identified and whether the sensor information is identified.

According to an embodiment of the present disclosure, a method of controlling an air mobility includes determining a risk zone on a first flight path of a first air mobility based on first surveillance information of the first air mobility, determining whether a second air mobility is an avoidance target located in the risk zone based on second surveillance information of the second air mobility or sensor information for identifying the second air mobility obtained by a sensor device of the first air mobility, and performing an avoidance flight of the first air mobility to avoid the second air mobility.

According to an embodiment, the determining of whether the second air mobility is the avoidance target located in the risk zone may include predicting a second flight path of the second air mobility based on the second surveillance information or the sensor information and determining the second air mobility as the avoidance target when the second flight path overlaps the risk zone.

According to an embodiment, the performing of the avoidance flight of the first air mobility may include providing the first flight path and the second flight path to a control center to request modification of the first flight path when it is determined that the second flight path obtained based on the second surveillance information overlaps with the risk zone and receiving a modified first flight path and performing the avoidance flight.

According to an embodiment, the performing of the avoidance flight of the first air mobility may include modifying the first flight path to avoid the second flight path when it is determined that the second flight path obtained based on the sensor information overlaps with the risk zone and performing the avoidance flight based on a modified first flight path.

According to an embodiment, the determining of whether the second air mobility is the avoidance target located in the risk zone may include searching for the second air mobility based on the sensor information in response to the second air mobility not being discovered based on the second surveillance information.

According to an embodiment, the determining of whether the second air mobility is the avoidance target located in the risk zone may include monitoring a radar reflected wave of the sensor device in response to the second air mobility not being discovered based on the second surveillance information.

According to an embodiment, the determining of whether the second air mobility is the avoidance target located in the risk zone may include obtaining an image by using a camera of the sensor device in response to the second air mobility not being discovered based on the radar reflected wave.

According to an embodiment, the determining of whether the second air mobility is the avoidance target located in the risk zone may include controlling the camera to point toward the second air mobility when the second air mobility is discovered based on the radar reflected wave.

According to an embodiment, the performing of the avoidance flight may include searching a table storing an avoidance scheme depending on whether the second surveillance information is identified and whether the sensor information is identified.

According to an embodiment, the performing of the avoidance flight may include identifying priorities for using the second surveillance information and the sensor information, depending on whether the second surveillance information is identified and whether the sensor information is identified.

### BRIEF DESCRIPTION OF THE DRAWINGS

The above and other objects, features, and advantages of embodiments of the present disclosure will be more apparent from the following detailed description taken in conjunction with the accompanying drawings, in which:
FIG. 1 is a diagram illustrating the configuration of a flight control device according to an embodiment of the present disclosure;
FIGS. 2 and 3 are diagrams illustrating a flight control method using the flight control device shown in FIG. 1;
FIG. 4 is a diagram illustrating a flight control device according to another embodiment of the present disclosure;
FIG. 5 is a diagram illustrating a surveillance area of an ADS-B device and sensor devices;
FIG. 6 is a flowchart illustrating a flight control method according to an embodiment of the present disclosure;
FIGS. 7 to 9 are diagrams illustrating a method of setting a risk zone to perform an avoidance flight;
FIG. 10 is a flowchart illustrating a flight control method according to another embodiment of the present disclosure;
FIG. 11 is a flowchart illustrating a flight control method according to still another embodiment of the present disclosure;
FIG. 12 is a flowchart illustrating a flight control method according to still another embodiment of the present disclosure; and
FIG. 13 is a block diagram illustrating a computing system according to an embodiment of the present disclosure.

### DETAILED DESCRIPTION OF ILLUSTRATIVE EMBODIMENTS

Hereinafter, some embodiments of the present disclosure will be described in detail with reference to the exemplary drawings. In adding the reference numerals to the components of each drawing, it should be noted that the identical or equivalent component is designated by the identical numeral even when it is displayed on other drawings. Further, in describing the embodiments of the present disclosure, a detailed description of the related known configuration or function will be omitted when it is determined that it interferes with the understanding of the embodiments of the present disclosure.

In describing the components of the embodiments according to the present disclosure, terms such as first, second, A, B, (a), (b), and the like may be used. These terms are merely intended to distinguish the components from other components, and the terms do not limit the nature, order, or sequence of the components. Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

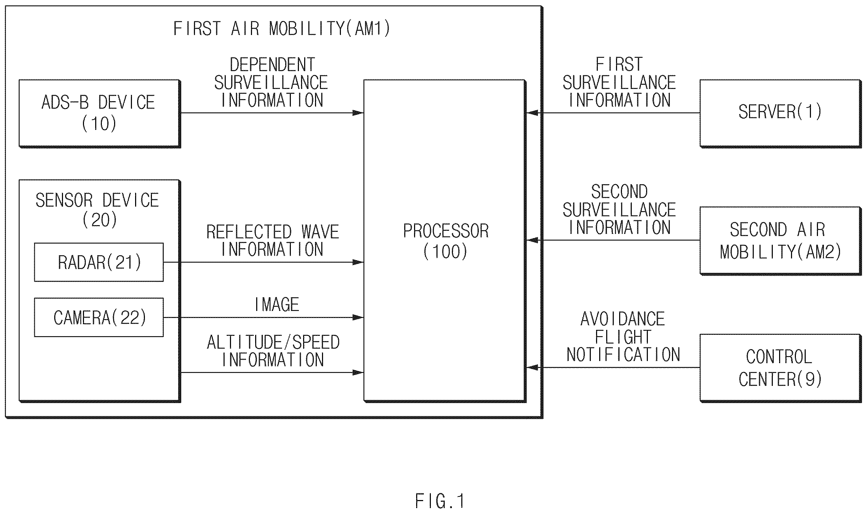

Hereinafter, embodiments of the present disclosure will be described in detail with reference to FIGS. 1 to 13.

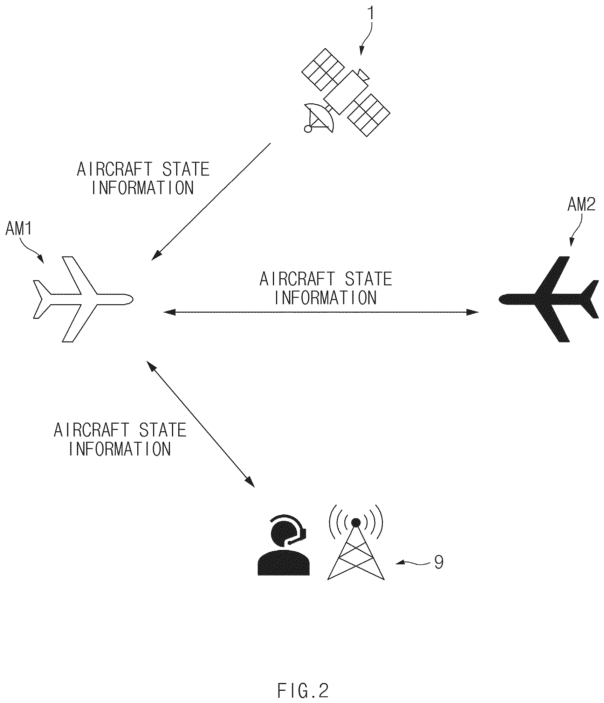

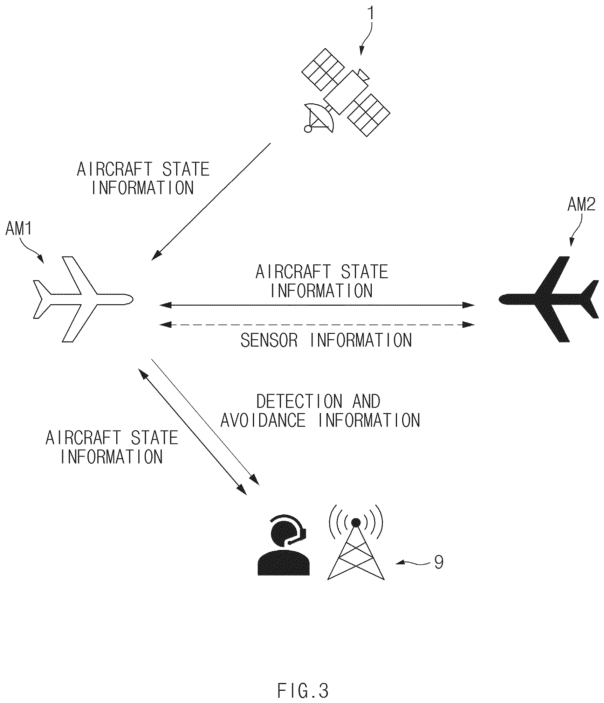

FIG. 1 is a diagram illustrating the configuration of a flight control device according to an embodiment of the present disclosure. FIGS. 2 and 3 are diagrams illustrating a flight control method using the flight control device shown in FIG. 1. A flight control device according to an embodiment of the present disclosure will be described below with reference to FIGS. 1 to 3.

In this specification, a first air mobility AM1 may be an aircraft that performs flight control and may include all aircrafts that operate along a route. The first air mobility AM1 may fly along a specified path, and the flight path of the first air mobility AM1 may be referred to as a first flight path.

A second air mobility AM2 may be an aircraft that flies around the flight path of the first air mobility AM1 and may include all objects that may be threats to the flight of the first air mobility AM1. The flight path or the movement path of the second air mobility AM2 may be referred to as a second flight path.

Referring to FIG. 1, a flight control device according to an embodiment of the present disclosure may include an automatic dependent surveillance-broadcast (ADS-B) device 10, a sensor device 20, and a processor 100.

The ADS-B device 10 may be for automatic dependent surveillance and may include a receiving device that receives surveillance information from a server 1. The surveillance information may include aircraft information, location information, speed information, route information, and the like of the first air mobility AM1, and the surveillance information that the first air mobility AM1 receives from the server 1 may be referred to as first surveillance information.

In addition, the ADS-B device 10 may receive second surveillance information of the second air mobility AM2 from the second air mobility AM2. The second surveillance information that the second air mobility AM2 receives from the server 1 may include aircraft information, location information, speed information, route information, and the like of the second air mobility AM2.

The sensor device 20 may be used to search around the route of the first air mobility AM1 and may include a radar 21 and a camera 22.

The camera 22 may be used to obtain surrounding images of the heading direction of the first air mobility AM1, and the tilting angle may be adjusted within a specified range by control of the processor 100.

The radar 21 may transmit radio waves and analyze the returning reflected waves. The radar 21 may provide two-dimensional information about the surroundings of the first air mobility AM1 and may obtain surrounding environment information relatively quickly.

In addition, the sensor device 20 may obtain aircraft state information and flight phase information. The aircraft state information may include yaw, pitch, and roll of the aircraft. To obtain the aircraft state information, the sensor device 20 may use an acceleration sensor and a gyro sensor. The acceleration sensor may be a three-axis acceleration sensor capable of measuring acceleration in three axes of the first air mobility AM1. The gyro sensor may measure the angular velocity of the first air mobility AM1 and may measure the angle at which the first air mobility AM1 rotates over time.

In addition, the sensor device 20 may obtain altitude information of the first air mobility AM1.

The processor 100 may determine the risk zone based on the first flight path based on the first surveillance information provided from the server 1. The processor 100 may determine the location, speed, altitude, and the like of the first air mobility AM1 on the first flight path based on the first surveillance information and set a risk zone based on them.

The processor 100 may determine whether the second air mobility AM2 is an avoidance target, and when it is an avoidance target, the processor 100 may perform an avoidance flight by modifying the first flight path. Embodiments of the avoidance flight may be performed in a cooperative manner as shown in FIG. 2 or by combining cooperative and non-cooperative manners as shown in FIG. 3.

The avoidance flight in the cooperative manner shown in FIG. 2 may be performed as follows.

The processor 100 of the first air mobility AM1 may determine the location and the second flight path of the second air mobility AM2 based on the second surveillance information provided from the second air mobility AM2 and determine whether the second flight path of the second air mobility AM2 overlaps the risk zone. When the second flight path overlaps the risk zone, the processor 100 may determine that the second air mobility AM2 is an avoidance target.

In response to confirming the avoidance target, the processor 100 may request modification of the first flight path while providing the first surveillance information and the second surveillance information to a control center 9.

The processor 100 may perform an avoidance flight based on the modified first flight path provided from the control center 9.

The avoidance flight in the non-cooperative manner shown in FIG. 3 may be performed as follows.

The processor 100 of the first air mobility AM1 may identify the second air mobility AM2 by using the sensor device 20. The processor 100 may determine whether the location or the second flight path of the second air mobility AM2 overlaps a risk zone to determine whether the second air mobility AM2 is an avoidance target.

In response to confirming the avoidance target, the processor 100 may determine the location and the second flight path of the second air mobility AM2 by using sensor information and may modify the first flight path to avoid it.

In addition, the processor 100 may perform an avoidance flight based on the modified first flight path and provide the avoidance flight result to the control center 9.

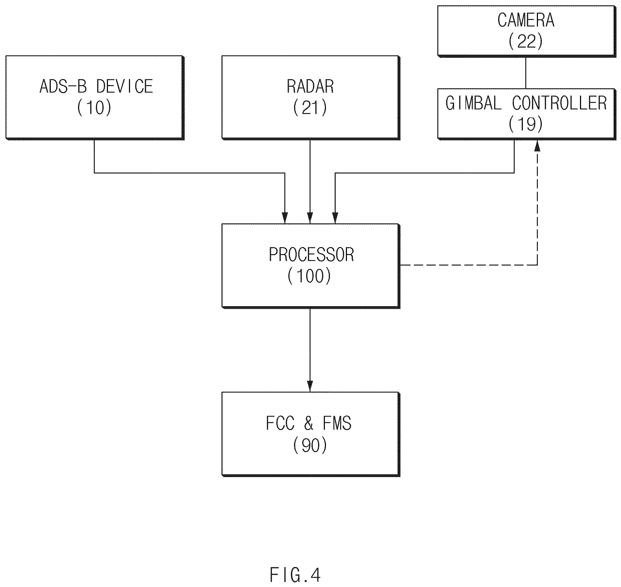

FIG. 4 is a diagram illustrating a flight control device according to another embodiment of the present disclosure.

Referring to FIG. 4, a flight control device according to another embodiment of the present disclosure may include the ADS-B device 10, the radar 21, the camera 22, a gimbal controller 19, the processor 100, and a flight control computer (FCC) and flight management system (FMS) 90. In the embodiment of FIG. 4, a detailed description of components that are substantially the same as the above-described embodiment will be omitted.

The processor 100 may determine the risk zone based on the first surveillance information.

In addition, the processor 100 may determine an avoidance target based on the second surveillance information, reflected wave information provided from the radar 21, and the image provided through the camera 22. When the second air mobility AM2 is identified by the radar 21 in the non-cooperative manner, the processor 100 may control the gimbal controller 19 based on the location information of the second air mobility AM2. The gimbal controller 19 may adjust the tilting angle of the camera 22.

When an avoidance target is identified, the processor 100 may modify the first flight path. Alternatively, the processor 100 may receive a modified first flight path from the control center 9.

The processor 100 may provide avoidance target information and the modified first flight path to the FCC and FMS 90.

The FCC and FMS 90 may perform an avoidance flight by controlling the first air mobility AM1 based on the modified first flight path. For example, the FCC and FMS 90 may control the flight of the first air mobility AM1 by controlling a motor or a transmission.

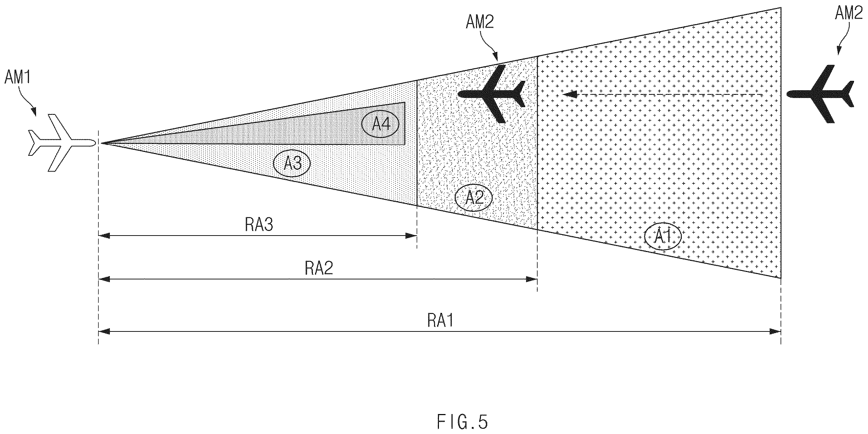

FIG. 5 is a diagram illustrating a surveillance area of an ADS-B device and sensor devices.

Referring to FIG. 5, the processor 100 may identify the second air mobility AM2 within the range of a first area A1 based on the second surveillance information received by the ADS-B device 10.

The processor 100 may identify the second air mobility AM2 within the range of a second area A2 by using the reflected wave from the radar 21.

The processor 100 may identify the second air mobility AM2 within the range of a third area A3 by using the image obtained through the camera 22. In addition, when pointing the camera 22 in the direction of the second air mobility AM2, the processor 100 may more precisely identify the second air mobility AM2 within the range of a fourth area A4.

As shown in the drawings, a detection range RA1 using the ADS-B device 10 may be longer than a detection range RA2 using the radar 21 and a detection range RA3 using the camera 22. In addition, the detection range RA3 using the camera 22 may be shorter than the detection range RA1 using the ADS-B device 10 and the detection range RA2 using the radar 21.

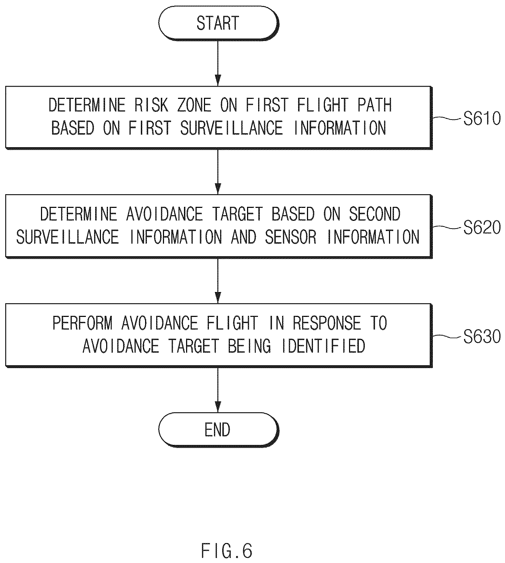

FIG. 6 is a flowchart illustrating a flight control method according to an embodiment of the present disclosure. FIG. 6 may include procedures controlled by the processor of the first air mobility shown in FIGS. 3 and 4. The flight control method according to an embodiment of the present disclosure will be described below with reference to FIG. 6.

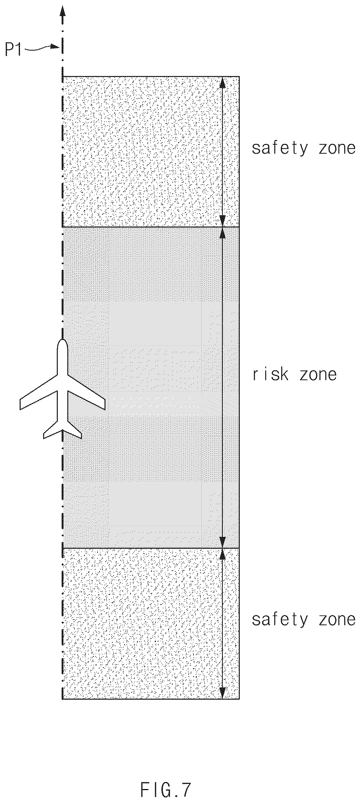

In operation S610, the processor 100 may determine a risk zone on the first flight path of the first air mobility AM1 based on the first surveillance information of the first air mobility AM1. The risk zone may be set using the embodiments shown in FIGS. 7 to 9.

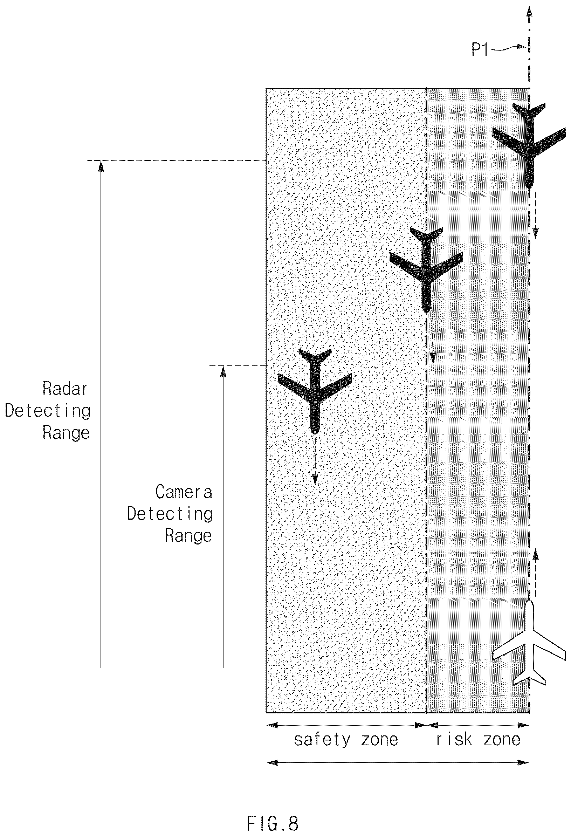

FIGS. 7 to 9 are diagrams illustrating a method of setting a risk zone to perform an avoidance flight. FIGS. 7 and 8 show the risk zone on the top-view, and FIG. 8 shows the risk zone on the side-view.

As shown in FIG. 7, the risk zone may be an area that includes a specified distance from the front and a specified distance from the rear of the first air mobility AM1 on a first flight path P1.

In addition, as shown in FIG. 8, the risk zone may be set to a specified range in the lateral direction centered on the first flight path P1.

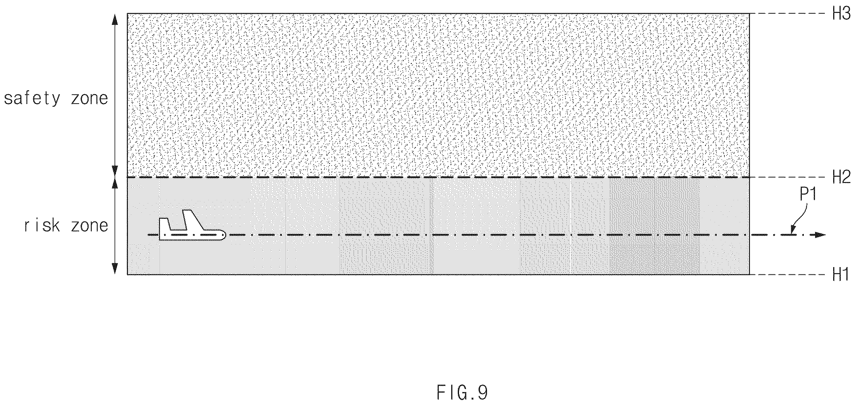

In addition, as shown in FIG. 9, the risk zone may be set to a specified altitude range H1 to H2 centered on the first flight path P1.

As shown in FIGS. 7 to 9, areas other than the risk zone may be set as a safety zone.

In operation S620, the processor 100 may determine whether the second air mobility AM2 is an avoidance target based on the second surveillance information or the sensor information.

The processor 100 may predict the second flight path of the second air mobility AM2 based on the second surveillance information or the sensor information. The processor 100 may determine the second air mobility AM2 as an avoidance target when the second flight path overlaps a risk zone.

In operation S630, the processor 100 may perform an avoidance flight of the first air mobility AM1 to avoid the second air mobility AM2.

The avoidance flight may be performed in a cooperative manner as shown in FIG. 2, or it may be performed by combining cooperative and non-cooperative manners as shown in FIG. 3. In a cooperative manner, the processor 100 may receive the modified first flight path from the control center 9. In a non-cooperative manner, the processor 100 may autonomously modify the first flight path and perform an avoidance flight.

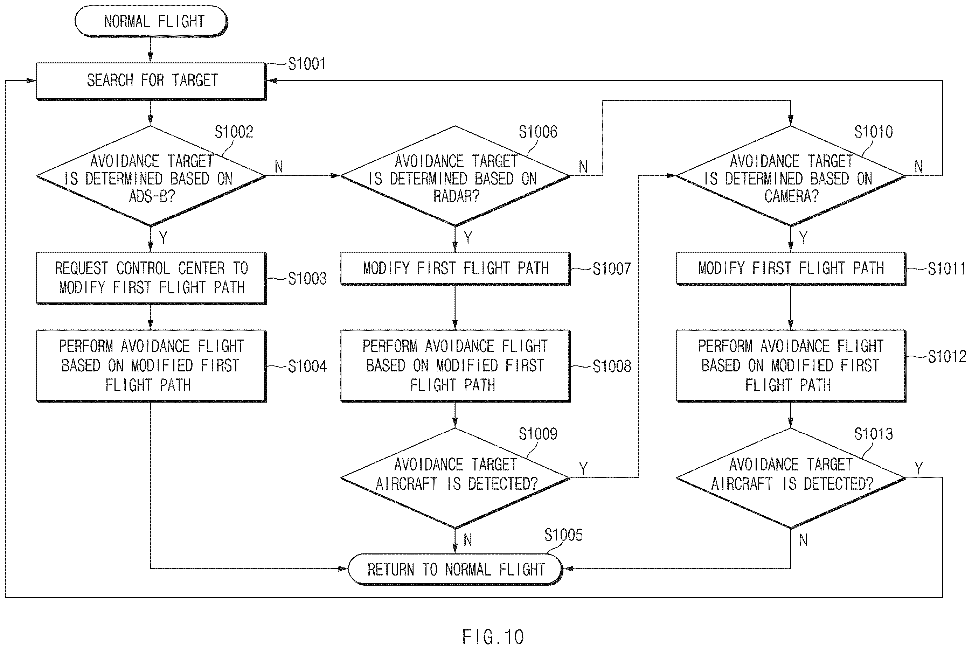

FIG. 10 is a flowchart illustrating a flight control method according to another embodiment of the present disclosure. FIG. 10 illustrates a procedure for monitoring identification information in time series by a processor. FIG. 10 may include procedures controlled by the processor of the first air mobility shown in FIGS. 3 and 4. The flight control method according to another embodiment of the present disclosure will be described below with reference to FIG. 10.

In operation S1001, the processor 100 may search for the second air mobility AM2.

In operation S1002, the processor 100 may determine whether the second air mobility AM2 is an avoidance target based on the second surveillance information.

In operation S1003, the processor 100 may request the control center 9 to modify the first flight path based on the fact that the second air mobility AM2 is an avoidance target. That is, the processor 100 may modify the first flight path in a cooperative manner.

In operation S1004, the processor 100 may receive the modified first flight path and perform an avoidance flight based on the first flight path.

In operation S1005, the processor 100 may return to the first flight path after the avoidance flight is terminated.

In operation S1006, the processor 100 may identify the second air mobility AM2 based on the radar 21 and determine whether the identified second air mobility AM2 is an avoidance target. Operation S1006 may be a procedure for responding to the fact that the second air mobility AM2 is not discovered based on the second surveillance information.

In operation S1007, when the second air mobility AM2 is an avoidance target, the processor 100 may modify the first flight path to avoid the second air mobility AM2. That is, when the processor 100 determines the avoidance target based on the radar 21, the processor 100 may modify the first flight path in a non-cooperative manner.

In operation S1008, the processor 100 may perform an avoidance flight based on the modified first flight path.

In operation S1009, the processor 100 may determine whether an avoidance target aircraft is detected while performing an avoidance flight.

Operation S1009 may include a procedure for determining whether the identified avoidance target remains in the risk zone of the first flight path.

In addition, operation S1009 may include a procedure for determining whether a new avoidance target is identified on the modified first flight path. Operation S1010 may be a procedure that responds to the fact that the second air mobility AM2 is not discovered based on the reflected wave of the radar 21.

Operation S1009 may be a procedure for detecting an avoidance target based on the second surveillance information provided from the ADS-B device 10 and the sensor information provided from the radar 21 and the camera 22.

In operation S1010, the processor 100 may identify the second air mobility AM2 based on the image obtained through the camera 22 and determine whether the identified second air mobility AM2 is an avoidance target.

In operation Sion, when the second air mobility AM2 is an avoidance target, the processor 100 may modify the first flight path to avoid the second air mobility AM2. That is, when the processor 100 determines an avoidance target based on the image obtained through the camera 22, the processor 100 may modify the first flight path in a non-cooperative manner.

In operation S1012, the processor 100 may perform an avoidance flight based on the modified first flight path.

In operation S1013, the processor 100 may determine whether an additional avoidance target exists while performing an avoidance flight.

Operation S1013 may include a procedure for determining whether the identified avoidance target remains in the risk zone of the first flight path.

In addition, operation S1013 may include a procedure for determining whether a new avoidance target is identified on the modified first flight path.

Operation S1013 may be a procedure for detecting an avoidance target based on the second surveillance information provided from the ADS-B device 10 and the sensor information provided from the radar 21 and the camera 22.

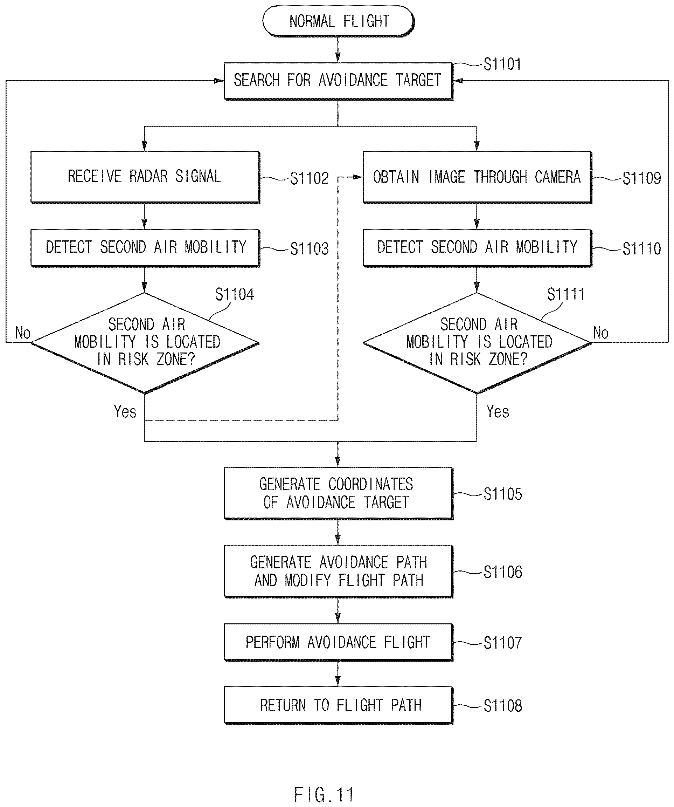

FIG. 11 is a flowchart illustrating a flight control method according to still another embodiment of the present disclosure. FIG. 11 illustrates an avoidance flight in a non-cooperative manner. FIG. 11 may include procedures controlled by the processor of the first air mobility shown in FIGS. 3 and 4. The flight control method according to still another embodiment of the present disclosure will be described below with reference to FIG. 11.

In operation S1101, the processor 100 may start searching for an avoidance target.

In operation S1102, the processor 100 may monitor the reception of reflected waves from the radar 21.

In operations S1103 and S1104, the processor 100 may determine whether the second air mobility AM2 is located in a risk zone in response to the second air mobility AM2 being detected by the radar 21.

In addition, in operation S1104, when the second air mobility AM2 is located in a risk zone, the processor 100 may adjust the gimbal controller 19 such that the tilting angle of the camera 22 is directed toward the second air mobility AM2.

In operation S1105, the processor 100 may determine the second air mobility AM2 as an avoidance target in response to the second air mobility AM2 being located in a risk zone. In addition, the processor 100 may generate coordinates of the second air mobility AM2.

In operation S1106, the processor 100 may modify the first flight path based on the coordinates of the avoidance target.

In operation S1107, the processor 100 may perform an avoidance flight to enter the modified first flight path.

In operation S1108, the processor 100 may return to the initial first flight path after performing an avoidance flight.

To this end, the processor 100 may determine whether an avoidance target is identified in a risk zone on the initial first flight path. In addition, the processor 100 may determine whether an avoidance target is identified in the risk zone on the modified first flight path. When there is no avoidance target on the first flight path and the modified first flight path, the processor 100 may return to the initial first flight path.

In response to starting the search for the avoidance target in operation S1101, the processor 100 may read the image obtained through the camera 22 in operation S1109.

In operation S1110, the processor 100 may detect the second air mobility AM2 in the image.

In operation S1111, the processor 100 may determine whether the second air mobility AM2 detected in the image is located in a risk zone.

In operation S1111, when it is determined that the second air mobility AM2 is located in a risk zone, the processor 100 may perform operations S1105 to S1108.

As shown in FIG. 11, while simultaneously monitoring the radar 21 and the camera 22 according to still another embodiment of the present disclosure, an avoidance flight may be performed based on information obtained through the radar 21 or the camera 22.

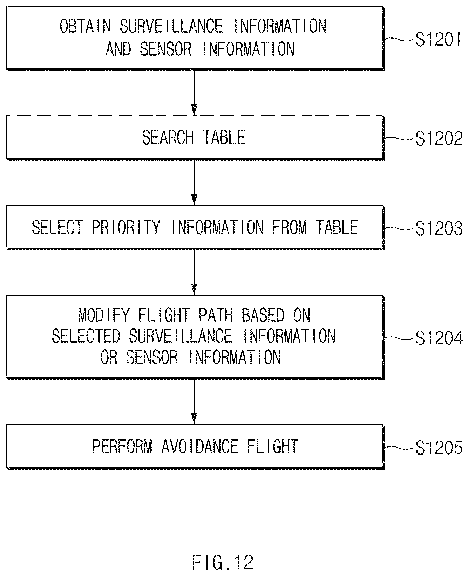

FIG. 12 is a flowchart illustrating a flight control method according to still another embodiment of the present disclosure. Table 1 illustrates an example of a table in which flight control methods are matched according to surveillance information and sensor information. FIG. 12 illustrates a method of performing avoidance flight by using a table such as Table 1. FIG. 12 illustrates procedures controlled by the processor of the first air mobility shown in FIGS. 3 and 4.

**Table 1**

| Classification | ADS-B | Radar | Camera | Priority |
|---|---|---|---|---|
| Case 1-1 | Identification | Identification | Identification | Surveillance information |
| Case 1-2 | Identification | - | Identification | Surveillance information |
| Case 1-3 | Identification | Identification | - | Surveillance information |
| Case 1-4 | Identification | - | - | Surveillance information |
| Case 2-1 | - | Identification | Identification | Radar and/or camera |
| Case 2-2 | - | - | Identification | Camera |
| Case 2-3 | - | Identification | - | Radar |
| Case 3-1 | - | - | - | Maintenance of first flight path |

Referring to Table 1, cases may be classified depending on whether surveillance information and sensor information are identified. The item marked as identification in the table may be a device that identifies the second air mobility AM2 to be avoided. For example, in Case 1-1, the second air mobility AM2 may be identified through the ADS-B device 10, the radar 21, and the camera 22.

The table may define a priority for selecting a device used for an avoidance flight when the second air mobility AM2 is identified in a plurality of devices.

With reference to FIG. 12 and Table 1, a flight control method according to still another embodiment of the present disclosure will be described below.

In operation S1201, the processor 100 may obtain surveillance information and sensor information. For example, the processor 100 may receive the surveillance information from the ADS-B device 10. In addition, the processor 100 may receive reflected wave information from the radar 21 and receive image information from the camera 22.

In operation S1202, the processor 100 may search the table and select a case for an avoidance flight depending on whether the surveillance information and the sensor information are obtained. For example, when an avoidance target is identified based on the ADS-B device 10 and the radar 21, the processor 100 may select Case 1-3, and when an avoidance target is identified based on the camera 22, the processor 100 may select Case 2-2.

In operation S1203, the processor 100 may search for a priority corresponding to the selected case.

The priority may be a reference for selecting information used for an avoidance flight. For example, as in Case 1-1, Case 1-2, and Case 1-3, when the second air mobility AM2 is identified by the ADS-B device 10, regardless of whether it is identified based on the sensor information, the surveillance information by the ADS-B device 10 may have priority.

In operation S1204, the processor 100 may modify the first flight path of the first air mobility AM1 based on the selected priority information.

For example, when priority is given to the ADS-B device 10 as in Case 1-1, Case 1-2, and Case 1-3, the first flight path may be modified by using the second surveillance information provided from the second air mobility AM2.

Alternatively, as in Case 2-1, when an avoidance target is identified based on the radar 21 and the camera 22, the camera 22 may be used to track the avoidance target while performing an avoidance flight based on the radar 21. That is, the processor 100 may use the location information of the second air mobility AM2 obtained based on the radar 21 to modify the first flight path. In addition, the processor 100 may control the gimbal controller 19 to direct the camera 22 toward the avoidance target in order to more precisely monitor the movement of the second air mobility AM2.

Alternatively, as in Case 2-2, when an avoidance target is identified only by the camera 22, the processor 100 may perform an avoidance flight by using the camera 22.

Alternatively, as in Case 2-3, when an avoidance target is identified only by the radar 21, the processor 100 may perform an avoidance flight based on the information acquired by the radar 21. When an avoidance target is identified only by the radar 21, the processor 100 may adjust the tilting angle of the camera 22 to retry identifying the avoidance target through the camera 22.

In operation S1205, the processor 100 may perform an avoidance flight based on the modified first flight path.

Operation S1205 may include a procedure for returning to the first flight path after the avoidance flight. The procedure for returning to the first flight path may include procedures for determining whether another air mobility is located in the risk zone during the avoidance flight process and returning when there is no other air mobility.

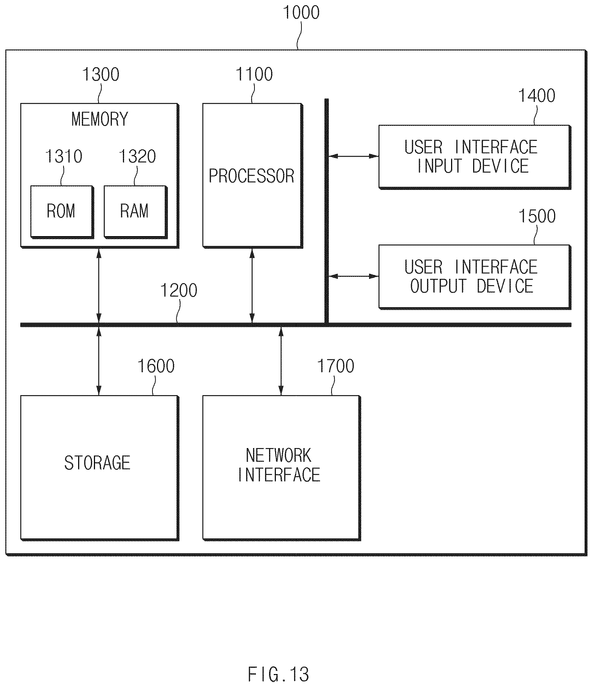

FIG. 13 is a block diagram illustrating a computing system according to an embodiment of the present disclosure.

Referring to FIG. 13, a computing system 1000 may include at least one processor 1100, a memory 1300, a user interface input device 1400, a user interface output device 1500, a storage (i.e., a memory) 1600, and a network interface 1700 connected through a bus 1200.

The processor 1100 may be a central processing device (CPU) or a semiconductor device that processes instructions stored in the memory 1300 and/or the storage 1600. The memory 1300 and the storage 1600 may include various types of volatile or non-volatile storage media. For example, the memory 1300 may include a read only memory (ROM) 1310 and a random access memory (RAM) 1320.

Accordingly, the processes of the method or algorithm described in relation to the embodiments of the present disclosure may be implemented directly by hardware executed by the processor 1100, a software module, or a combination thereof. The software module may reside in a storage medium (that is, the memory 1300 and/or the storage 1600), such as a RAM, a flash memory, a ROM, an EPROM, an EEPROM, a register, a hard disk, a solid state drive (SSD), a detachable disk, or a CD-ROM.

The exemplary storage medium is coupled to the processor 1100, and the processor 1100 may read information from the storage medium and may write information in the storage medium. In another method, the storage medium may be integrated with the processor 1100. The processor and the storage medium may reside in an application specific integrated circuit (ASIC). The ASIC may reside in a user terminal. In another method, the processor and the storage medium may reside in the user terminal as an individual component.

According to the embodiments of the present disclosure, by performing an avoidance flight in a cooperative manner as well as a non-cooperative manner based on ADS-B information and sensor information of an air mobility, it is possible to more safely perform avoidance flights of various air mobilities regardless of the type of air mobility or the presence or absence of a pilot.

In addition, according to the embodiments of the present disclosure, because the avoidance flight manner optimized for a situation is selected using the established ADS-B information and the sensor device of an air mobility, it is possible to safely perform an avoidance flight without the need to construct an additional system.

In addition, various effects that are directly or indirectly understood through embodiments of the present disclosure may be provided.

Although exemplary embodiments of the present disclosure have been described for illustrative purposes, those skilled in the art will appreciate that various modifications, additions, and substitutions are possible, without departing from the scope and spirit of the disclosure.

Therefore, the exemplary embodiments disclosed in the present disclosure are provided for the sake of descriptions, not limiting the technical concepts of the present disclosure, and it should be understood that such exemplary embodiments are not intended to limit the scope of the technical concepts of the present disclosure. The protection scope of the present disclosure should be understood by the claims below, and all the technical concepts within the equivalent scopes should be interpreted to be within the scope of the right of the present disclosure.

## Claims

1. An apparatus for controlling an air mobility, the apparatus comprising:
an receiving device mounted on a first air mobility and configured to receive first surveillance information of the first air mobility and second surveillance information of a second air mobility;
a sensor device mounted on the first air mobility and configured to obtain sensor information for searching for the second air mobility;
one or more processors; and
a storage device storing a program to be executed by the one or more processors, the program including instructions to:
determine a risk zone on a first flight path of the first air mobility based on the first surveillance information;
determine whether the second air mobility is an avoidance target located in the risk zone based on the second surveillance information or the sensor information; and
perform an avoidance flight of the first air mobility in response to a determination that the second air mobility is the avoidance target.

2. The apparatus of claim 1, wherein the program further includes instructions to:
predict a second flight path of the second air mobility based on the second surveillance information or the sensor information; and
determine the second air mobility as the avoidance target based on a determination that the second flight path overlaps the risk zone.

3. The apparatus of claim 2, wherein the program further includes instructions to:
provide the first flight path and the second flight path to a control center; and
request modification of the first flight path based on the determination that the second flight path obtained based on the second surveillance information overlaps the risk zone.

4. The apparatus of claim 2 or 3, wherein the program further includes instructions to modify the first flight path to avoid the second flight path based on the determination that the second flight path obtained based on the sensor information overlaps the risk zone.

5. The apparatus of one of claims 1-4, wherein the program further includes instructions to search for the second air mobility based on the sensor information in response to the second air mobility not being discovered based on the second surveillance information.

6. The apparatus of claim 5, wherein the program further includes instructions to monitor a radar reflected wave of the sensor device in response to the second air mobility not being discovered based on the second surveillance information.

7. The apparatus of claim 6, wherein the program further includes instructions to obtain an image by using a camera of the sensor device in response to the second air mobility not being discovered based on the radar reflected wave.

8. The apparatus of claim 7, wherein the program further includes instructions to control the camera to point toward the second air mobility in a case in which the second air mobility is discovered based on the radar reflected wave.

9. The apparatus of one of claims 1-8, wherein the program further includes instructions to:
search a table storing an avoidance scheme according to whether the second surveillance information is identified and whether the sensor information is identified; and
perform the avoidance flight of the first air mobility.

10. The apparatus of claim 9, wherein the table stores priorities for using the second surveillance information and the sensor information according to whether the second surveillance information is identified and whether the sensor information is identified.

11. A method of controlling an air mobility, the method comprising:
determining a risk zone on a first flight path of a first air mobility based on first surveillance information of the first air mobility;
determining whether a second air mobility is an avoidance target located in the risk zone based on second surveillance information of the second air mobility or sensor information for identifying the second air mobility obtained by a sensor device of the first air mobility; and
performing an avoidance flight of the first air mobility to avoid the second air mobility.

12. The method of claim 11, wherein determining whether the second air mobility is the avoidance target located in the risk zone comprises:
predicting a second flight path of the second air mobility based on the second surveillance information or the sensor information; and
determining the second air mobility as the avoidance target based on a determination that the second flight path overlaps the risk zone.

13. The method of claim 12, wherein performing the avoidance flight of the first air mobility comprises:
modifying the first flight path to avoid the second flight path based on the determination that the second flight path obtained based on the sensor information overlaps the risk zone; and
performing the avoidance flight based on a modified first flight path.

14. The method of one of claims 11-13, wherein determining whether the second air mobility is the avoidance target located in the risk zone comprises searching for the second air mobility based on the sensor information in response to the second air mobility not being discovered based on the second surveillance information.

15. The method of claim 14, wherein determining whether the second air mobility is the avoidance target located in the risk zone comprises monitoring a radar reflected wave of the sensor device in response to the second air mobility not being discovered based on the second surveillance information.
